# EUROPEAN PATENT SPECIFICATION

(11) **EP 2 258 774 B1**
(45) Date of publication and mention of the grant of the patent: **18.12.2013**
(21) Application number: 09722759.9
(22) Date of filing: 16.03.2009
(51) Int. Cl.: C08L 67/00, C08K 5/435

(54) **POLYESTER RESIN COMPOSITION**
POLYESTERHARZZUSAMMENSETZUNG
COMPOSITION DE RÉSINE DE POLYESTER

(30) Priority: 21.03.2008 JP 2008073661; 11.08.2008 JP 2008206620
(43) Date of publication of application: 08.12.2010
(73) Proprietor: Adeka Corporation, Tokyo 1160012 (JP)
(72) Inventor: NOMURA, Kazukiyo, Saitama-shi Saitama 336-0022 (JP)
(74) Representative: Jones, Helen M.M.
(86) International application number: PCT/JP2009/055077
(87) International publication number: WO 2009/116499

(56) References cited:
- WO-A1-2007/129527
- WO-A1-2008/038465
- JP-A- 2 248 460

## Description

### TECHNICAL FIELD

The present invention relates to a polyester resin composition, more particularly, a polyester resin composition having a high crystallization rate and excellent moldability.

### BACKGROUND ART

Polyester resins such as polyethylene terephthalate, polymethylene terephthalate, polyethylene naphthalate and polylactic acid are excellent in heat resistance, chemical resistance, mechanical properties, electrical properties and the like, as well as in the cost and performances, so that they are industrially widely used as fibers and films. Further, since they also have good gas barrier properties, sanitary performances and transparency, they are widely used also for beverage bottles, cosmetic and drug containers, detergent and shampoo containers and the like.

However, in spite of the fact that polyester resins are crystalline resins, they generally show very low crystallization rate, so that their ranges of molding conditions are very narrow and enhancement of the processing cycle is difficult, and therefore their uses as molding materials are still limited. Further, since the heat distortion temperature of a molded product obtained by molding of a polyester resin is low, the temperature at which the product can be used is limited, which has been problematic.

As the method to enhance the crystallization rate of a polyester resin, there is a generally-known method wherein a nucleating agent is added, and examples of such a nucleating agent include minerals, metal salts of organic acids, inorganic salts and metal oxides, and examples of compounds which are widely used as crystalline nucleating agents include metal salts such as sodium benzoate, p-tert-butyl aluminum benzoate, and metal salts of aromatic phosphates; and compounds such as dibenzylidene sorbitol.

Further, there is a known method wherein an oligomer of the resin is blended for the purpose of enhancing the fluidity of the resin at the processing temperature. For example, in Patent Document 1, a method wherein a metal salt of an abietic acid compound is added in order to promote the crystallization rate of polyester is proposed. Further, in Patent Document 2, a method wherein 4-aminobenzenesulfonamide is added to an olefin resin is disclosed. Still further, in Patent Document 3, a method wherein a metal salt of a phosphoric acid ester and a metal salt of an aliphatic carboxylic acid are added to a crystalline polymer is proposed.

Further, in Patent Document 4, a method wherein a transition metal salt of a carboxylic acid is used as a nucleating agent of a resin composition containing polyethylene terephthalate and polyethylene naphthalate is proposed. Further, in Patent Document 5, a method wherein a polyester resin composition is obtained using an alkylene-bis fatty acid amide or a quinacridone compound as a nucleating agent is proposed. Still further, the present inventors proposed in Patent Document 6 a method to use a metal salt of a sulfonamide compound for a polyester resin.
Patent Document 1: Japanese Unexamined Patent Application Publication No. 08-059968
Patent Document 2: US Patent No. 3756997
Patent Document 3: Japanese Unexamined Patent Application Publication No. 2005-162867
Patent Document 4: Japanese Unexamined Patent Application Publication (Translation of PCT Application) No. 2002-507955
Patent Document 5: Japanese Unexamined Patent Application Publication No. 2006-113473
Patent Document 6: Japanese Unexamined Patent Application Publication No. 2007-327028

### DISCLOSURE OF THE INVENTION

### PROBLEMS TO BE SOLVED BY THE INVENTION

However, the improvement effects on the crystallization rates of polyester resins by the known additives described in Patent Documents 1 to 5 are still not satisfactory. Further, although a method wherein an oligomer of a resin such as ethylene glycol is added contributes to the crystallization rate of the resin to some extent, the mechanical strength or the like of the obtained molded product decreases in some cases, which has been problematic.

Further, the method described in Patent Document 6 showed a good crystallization rate during isothermal crystallization in a high-temperature state (at about 215°C to 230°C) in cases where a crystalline nucleating agent was solely added, but, in injection molding wherein a polyester resin composition was cooled rapidly during metal molding, the crystallization rate of the polyester resin composition was not sufficient, so that further improvement has been demanded.

Thus, the present invention aims to solve the problems in the conventional art, thereby providing a polyester resin composition which is excellent in the crystallization rate.

### MEANS FOR SOLVING THE PROBLEMS

The present inventors intensively studied to solve the above problems and discovered that, by blending a metal salt of a certain sulfonamide compound and a plasticizer to a polyester resin, the above purpose can be achieved, thereby completing the present invention.

That is, the polyester resin composition of the present invention comprises 0.001 to 5 parts by mass of a metal salt of a sulfonamide compound (b) represented by the following General Formula (1): 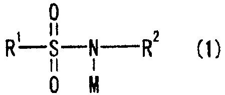 (wherein, in General Formula (1), M represents a monovalent metal atom; R¹ and R² each independently represents a hydrogen atom, a C₁-C₁₀ branched or linear alkyl group which optionally has a substituent, or a C₃-C₃₀ cyclic group which optionally has a substituent; and R¹ and R² are optionally linked together to form a cyclic group) and 0.1 to 10 parts by mass of a plasticizer (c) with respect to 100 parts by mass of a polyester resin (a).

Further, in the polyester resin composition of the present invention, the plasticizer (c) is preferably a compound represented by the following General Formula (2): 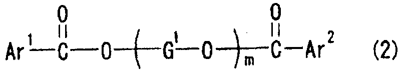 (wherein, in General Formula (2), Ar¹ and Ar² each independently represents a C₆-C₃₀ aryl group which optionally has a substituent; G¹ represents a C₂-C₄ alkylene group which optionally has a branch; m represents an integer of 2 to 30; and the consecutive groups of (-G¹-O-) optionally have different structures), or a compound represented by the following General Formula (3): 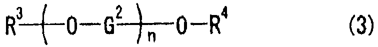 (wherein, in General Formula (3), R³ and R⁴ each independently represents a hydrogen atom, a C₁-C₁₀ branched or linear alkyl group which optionally has a substituent, or a C₆-C₃₀ aryl group which optionally has a substituent; G² represents a C₂-C₄ alkylene group which optionally has a branch; n represents an integer of 2 to 30; and the consecutive groups of (-O-G²-) optionally have different structures), and the plasticizer (c) is preferably an aromatic diester compound of a polyalkylene glycol obtained from a polyethylene glycol having an average molecular weight of not more than 1000 and benzoic acid.

Further, in the polyester resin composition of the present invention, M in the General Formula (1) is preferably a sodium atom, and the polyester resin (a) preferably contains at least one selected from the group consisting of polyethylene terephthalate, polybutylene terephthalate and polyethylene naphthalate.

### EFFECT OF THE INVENTION

By blending a metal salt of a sulfonamide compound (b) as a crystalline nucleating agent and a plasticizer (c) to a polyester resin (a), a polyester resin composition can be provided which shows a high crystallization rate in a rapidly cooled state and excellent moldability.

### BEST MODE FOR CARRYING OUT THE INVENTION

The polyester resin composition of the present invention will be described in detail.

The polyester resin (a) used for the polyester resin composition of the present invention is a normal thermoplastic polyester resin, and not restricted. Examples of the resin used include aromatic polyesters such as polyalkylene terephthalates including polyethylene terephthalate, polybutylene terephthalate and polycyclohexane dimethylene terephthalate, and polyalkylene naphthalates including polyethylene naphthalate and polybutylene naphthalate; polyetherester resins produced by copolymerization of a constitutive component of a polyester and another acid component and/or glycol component (e.g., an acid component such as isophthalic acid, adipic acid, sebacic acid, glutaric acid, diphenylmethane dicarboxylic acid or dimer acid; and/or a glycol component such as hexamethylene glycol, bisphenol A or a neopentylglycol alkylene oxide adduct); degradative aliphatic polyesters such as polyhydroxybutyrate, polycaprolactone, polybutylene succinate, polyethylene succinate, polylactic acid resins, polymalic acid, polyglycolic acid, polydioxanone and poly(2-oxetanone); and polyester resins in a broad sense such as aromatic polyester/polyether block copolymers, aromatic polyester/polylactone block copolymers and polyarylates. Among these, at least one selected from the group consisting of polyethylene terephthalate, polybutylene terephthalate and polyethylene naphthalate is preferably used.

Further, such thermoplastic polyester resins may be used individually, or as a blend of a plurality of resins (e.g., a blend of polyethylene terephthalate and polybutylene terephthalate) or a copolymer thereof (e.g., a copolymer of polybutylene terephthalate and polytetramethylene glycol), and, especially, those having melting points of 200°C to 300°C are preferably used because they characteristically show heat resistance.

Examples of the monovalent metal atom represented by M in the General Formula (1) include alkaline metal atoms such as lithium, sodium and potassium, and especially sodium is preferably used because of its excellent crystallization action.

Examples of the C₁-C₁₀ branched or linear alkyl group which optionally has a substituent, which is represented by R¹ and R² in the General Formula (1) and R³ and R⁴ in the General formula (3), include methyl, ethyl, propyl, isopropyl, butyl, isobutyl, sec-butyl, tert-butyl, amyl, isoamyl, tert-amyl, hexyl, heptyl, octyl, isooctyl, 2-ethylhexyl, tert-octyl, nonyl and decyl; and in such an alkyl group, an arbitrary -CH₂- may be substituted with -O-, -CO-, -COO- or -SiH₂-, and each of a part or all of the hydrogen atoms may be substituted with a halogen atom, alkoxy, amino, hydroxy, cyano, carboxyl, -NM-SO₂-R¹, -SO₂-NM-R² or the like (R¹ and R² have the same meanings as in the General Formula (1), and M represents a sodium atom).

The C₃-C₃₀ cyclic group which optionally has a substituent which is represented by R¹ and R² in the General Formula (1) may be a monocyclic ring, polycyclic ring, fused ring or assembled ring, and either an aromatic cyclic group or a saturated aliphatic cyclic group may be used. The carbon atoms of the ring may be substituted with an oxygen atom, nitrogen atom, sulfur atom or the like, and a part or all of the hydrogen atoms of the ring may be substituted with a halogen atom, alkyl, alkoxy, amino, hydroxy, cyano, carboxyl, -NM-SO₂-R¹, -SO₂-NM-R² or the like (M, R¹ and R² have the same meanings as in the General Formula (1)). Further, R¹ and R² may be linked together to form a cyclic group.

Examples of such a cyclic group include pyrrole, furan, thiophene, imidazole, pyrazole, oxazole, isoxazole, thiazole, isothiazole, benzothiazole, benzoisothiazole, benzothiazole-1,1-dioxide, benzoisothiazole-1,1-dioxide, benzothiazol-3-one-1,1-dioxide, benzoisothiazol-3-one-1,1-dioxide, pyridine, pyridazine, pyrimidine, pyrazine, piperidine, piperazine, morpholine, phenyl, naphthyl, anthracene, biphenyl, triphenyl, 2-methylphenyl (o-tolyl, cresyl), 3-methylphenyl (m-tolyl), 4-methylphenyl (p-tolyl), 4-chlorophenyl, 4-hydroxyphenyl, 3-isopropylphenyl, 4-isopropylphenyl, 4-butylphenyl, 4-isobutylphenyl, 4-tert-butylphenyl, 4-hexylphenyl, 4-cyclohexylphenyl, 4-octylphenyl, 4-(2-ethylhexyl)phenyl, 4-stearylphenyl, 2,3-dimethylphenyl (xylyl), 2,4-dimethylphenyl, 2,5-dimethylphenyl, 2,6-dimethylphenyl, 3,4-dimethylphenyl, 3,5-dimethylphenyl, 2,4-di-tert-butylphenyl, 2,5-di-tert-butylphenyl, 2,6-di-tert-butylphenyl, 2,4-di-tert-pentylphenyl, 2,5-di-tert-aminophenyl, 2,5-di-tert-octylphenyl, 2,4-dicumylphenyl, cyclohexylphenyl, biphenyl, 2,4,5-trimethylphenyl (mesityl), 4-aminophenyl, 5-dimethylaminonaphthyl, 6-ethoxy-benzothiazolyl, 2,6-dimethoxy-4-pyrimidyl, 5-methyl-1,3,4-thiadiazole-2-yl and 5-methyl-3-isoxazolyl.

Examples of the C₆-C₃₀ aryl group which optionally has a substituent, which is represented by Ar¹ and Ar² in the General Formula (2) and R³ and R⁴ in the General Formula (3), include phenyl, tolyl, naphthyl, anthracene and biphenyl, and a part or all of the hydrogen atoms of the aryl group may be substituted with a halogen atom, alkyl, alkoxy, amino, hydroxy, cyano, carboxyl, -NM-SO₂-R¹, -SO₂-NM-R² or the like (M, R¹ and R² have the same meanings as in the General Formula (1)).

Examples of the C₂-C₄ alkylene group which optionally has a branch which is represented by G¹ in the General Formula (2) and G² in the General Formula (3) include ethylene, propylene, butylene and isobutylene, and the hydrogen atoms of the alkylene group may be substituted with an alkoxy group, halogen atom, hydroxy group or the like. The consecutive groups of (-G¹-O-) in the General Formula (2) optionally have mutually different structures, and the consecutive groups of (-O-G²-) in the General Formula (3) optionally have mutually different structures.

Preferred examples of the metal salt of the sulfonamide compound (b) represented by the General Formula (1) include the compounds No. 1 to No. 9 below.

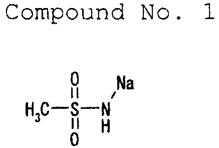

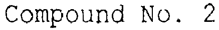

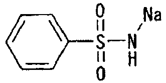

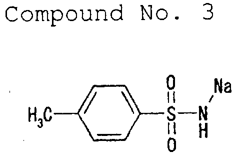

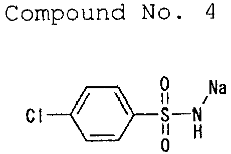

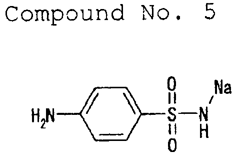

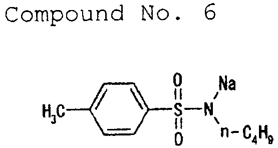

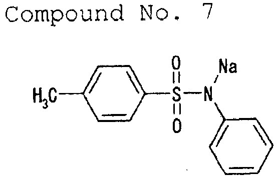

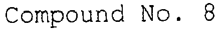

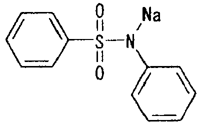

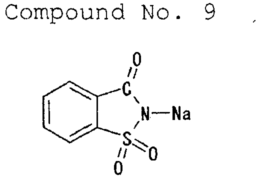

The metal salt of the sulfonamide compound (b) of the present invention is blended in an amount of 0.001 to 5 parts by mass, preferably 0.05 to 5 parts by mass, more preferably 0.1 to 3 parts by mass with respect to 100 parts by mass of the polyester resin (a). In cases where the amount to be blended is less than 0.001 part by mass, the effect of addition is not sufficient, while in cases where the amount is more than 5 parts by mass, bleeding of the metal salt of the sulfonamide compound (b) may occur on the surface of the polyester resin composition.

The average particle diameter of the metal salt of the sulfonamide compound (b) of the polyester resin composition of the present invention is preferably not more than 10 µm, especially preferably not more than 5 µm. In cases where the diameter is more than 10 µm, the crystallization action to the polyester resin may be insufficient.

The plasticizer (c) represented by the General Formula (2) is synthesized by a normal known method. Examples of the method by which it is synthesized include a dehydration condensation reaction between a hydroxy compound and an aromatic carboxylic acid, a transesterification reaction between a hydroxy compound and an aromatic carboxylic acid ester, and a method wherein a hydroxy compound and an aromatic carboxylic acid halide are allowed to react using a dehydrohalogenation scavenger.

Further, the plasticizer (c) represented by the General Formula (3) is synthesized by a normal known method similarly to the plasticizer (c) represented by the General Formula (2). Examples of the method by which it is synthesized include a dehydration condensation reaction between a hydroxy compound and a fatty acid or an aromatic fatty acid, a transesterification reaction between a hydroxy compound and a fatty acid ester or an aromatic fatty acid ester, and a method wherein a hydroxy compound and a fatty acid halide or an aromatic fatty acid halide are allowed to react using a dehydrohalogenation scavenger.

Particular examples of the plasticizer (c) represented by the General Formula (2) or (3) preferably include the compounds No. 10 to No. 21 shown in Table 1 below having average molecular weights (MW) of 100 to 1000, but the present invention is not restricted to these compounds.

**[Table 1]**

| Compound No. | Compound name |
|---|---|
| Compound No. 10 | Polyethylene glycol (MW 300) monohexyl ether |
| Compound No. 11 | Polyethylene glycol (MW 600) diethyl ether |
| Compound No. 12 | Polyethylene glycol (MW 400) diphenyl ether |
| Compound No. 13 | Polyethylene glycol (MM 600) methyl butyl ether |
| Compound No. 14 | Polyethylene glycol (MW 300) di-2-ethyl hexyl ether |
| Compound No. 15 | Polyethylene glycol (MW 900) di-2-ethyl hexyl ether |
| Compound No. 16 | Polypropylene glycol (MW 400) di-4-methyl phenyl ether |
| Compound No. 17 | Polytetramethylene glycol (MW 600) dihexyl ether |
| Compound No. 18 | Polyethylene glycol/polyprcpylene glycol (1/1 mixture) (MW 600) didecyl ether |
| Compound No. 19 | Polyethylene glycol (MW 400) dibenzoate |
| Compound No. 20 | Polyethylene glycol (MW 400) di-4-tert-butyl benzoate |
| Compound No. 21 | Polyethylene glycol (MW 400) dimethyl ether |

In terms of the amount of the plasticizer (c) of the present invention represented by the General Formula (2) or (3) to be added, the plasticizer (c) is blended in an amount of 0.1 to 10 parts by mass, preferably 1 to 10 parts by mass with respect to 100 parts by mass of the polyester resin (a). In cases where the amount is less than 0.1 part by mass, the effect of addition is not sufficient, while in cases where it is more than 10 parts by mass, phenomena such as bleeding of the plasticizer (c) on the surface of the polyester resin composition may occur.

As required, other generally-used additives may be added to the polyester resin composition as long as these do not adversely affect the effect of the present invention.

Examples of the other additives which may be used include antioxidants containing a phenol antioxidant, phosphorous antioxidant, sulfur-containing antioxidant and/or the like; light stabilizers containing a hindered amine light stabilizer, ultraviolet absorber and/or the like; lubricants such as hydrocarbon lubricants, fatty acid lubricants, aliphatic alcohol lubricants, aliphatic ester lubricants, aliphatic amide compounds, aliphatic carboxylic acid metal salts and other metal soap lubricants; heavy metal inactivators; anti-clouding agents; antistatic agents such as cationic surfactants, anionic surfactants, nonionic surfactants and amphoteric surfactants; halogenated compounds; phosphoric acid ester compounds; phosphoric acid amide compounds; melamine compounds; fluorine resins or metal oxides; flame retardants such as (poly)melamine phosphate and (poly)piperazine phosphate; fillers such as fiberglasses and calcium carbonate; pigments; silicate inorganic additives such as hydrotalcite, fumed silica, microparticulate silica, silica stone, diatomaceous earths, clay, kaolin, diatomaceous earth, silica gel, calcium silicate, sericite, kaolinite, flint, feldspar powder, vermiculite, attapulgite, talc, mica, minesotite, pyrophyllite and silica; and crystalline nucleating agents such as dibenzylidene sorbitol, bis(p-methylbenzylidene) sorbitol, bis(p-ethylbenzylidene)sorbitol and disodium bicyclo[2.2.1]heptane-2,3-dicarboxylate. Antioxidants containing a phenol antioxidant and/or a phosphorous antioxidant are preferably used since these have actions as anti-coloring agents for polyester resin compositions.

Examples of the phenol antioxidant include 2,6-di-tert-butyl-p-cresol, 2,6-diphenyl-4-octadecyloxyphenol, stearyl(3,5-di-tert-butyl-4-hydroxyphenyl)propionate, distearyl(3,5-di-tert-butyl-4-hydroxybenzyl)phosphonate, tridecyl-3,5-di-tert-butyl-4-hydroxybenzylthioacetate, thiodiethylenebis[(3,5-di-tert-butyl-4-hydroxyphenyl)propionate], 4,4'-thiobis(6-tert-butyl-m-cresol), 2-octylthio-4,6-di(3,5-di-tert-butyl-4-hydroxyphenoxy)-s-triazine, 2,2'-methylenebis(4-methyl-6-tert-butylphenol), bis[3,3-bis(4-hydroxy-3-tert-butylphenyl)butyric acid]glycol ester, 4,4'-butylidenebis(2,6-di-tert-butylphenol), 4,4'-butylidenebis(6-tert-butyl-3-methylphenol), 2,2'-ethylidenebis(4,6-di-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl]terephthalate, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, tetrakis[methylene-3-(3',5'-di-tert-butyl-4'-hydroxyphenyl)propionate]methane, 2-tert-butyl-4-methyl-6-(2-acroyloxy-3-tert-butyl-5-methylbenzyl)phenol, 3,9-bis[2-(3-tert-butyl-4-hydroxy-5-methylhydrocinnamoyloxy)-1,1-dimethylethyl]-2,4,8,10-tetraoxaspiro[5.5]undecane, and triethyleneglycolbis[β-(3-tert-butyl-4-hydroxy-5-methylphenyl)propionate].

The amount of the phenol antioxidant to be used is 0.001 to 10 parts by mass, preferably 0.01 to 5 parts by mass with respect to 100 parts by mass of the polyester resin.

Examples of the phosphorous antioxidant include triphenylphosphite, tris(2,4-di-tert-butylphenyl)phosphite, tris(2,5-di-tert-butylphenyl)phosphite, tris(nonylphenyl)phosphite, tris(dinonylphenyl)phosphite, tris(mono- and di- mixed-nonylphenyl)phosphite, diphenyl acid phosphite, 2,2'-methylenebis(4,6-di-tert-butylphenyl)octylphosphite, diphenyl decyl phosphite, diphenyl octyl phosphite, di(nonylphenyl)pentaerythritol diphosphite, phenyl diisodecyl phosphite, tributyl phosphite, tris(2-ethylhexyl)phosphite, tridecyl phosphite, trilauryl phosphite, dibutyl acid phosphite, dilauryl acid phosphite, trilauryl trithiophosphite, bis(neopentylglycol)-1,4-cyclohexane dimethyl diphosphite, bis(2,4-di-tert-butylphenyl)pentaerythritol diphosphite, bis(2,5-di-tert-butylphenyl)pentaerythritol diphosphite, bis(2,6-di-tert-butyl-4-methylphenyl)pentaerythritol diphosphite, bis(2,4-dicumylphenyl)pentaerythritol diphosphite, distearyl pentaerythritol diphosphite, tetra(C12-15-mixed alkyl)-4,4'-isopropylidene diphenyl phosphite, bis[2,2'-methylenebis(4,6-diamylphenyl)]-isopropylidene diphenyl phosphite, tetratridecyl-4,4'-butylidenebis(2-tert-butyl-5-methylphenol)diphosphite, hexa(tridecyl)-1,1,3-tris(2-methyl-5-tert-butyl-4-hydroxyphenyl)butane triphosphite, tetrakis(2,4-di-tert-butylphenyl)biphenylene diphosphonite, tris(2-[(2,4,7,9-tetrakistert-butyldibenzo[d,f][1,3,2]dioxaphosphepine-6-yl)oxy]ethyl)amine, 9,10-dihydro-9-oxa-10-phosphaphenanthrene-10-oxide, and 2-butyl-2-ethylpropanediol-2,4,6-tritert-butylphenol monophosphite

The amount of the phosphorous antioxidant to be used is 0.001 to 10 parts by mass, preferably 0.01 to 5 parts by mass with respect to 100 parts by mass of the polyester resin.

Examples of the sulfur-containing antioxidant include dialkyl thiodipropionates such as the dilauryl, dimyristyl, myristylstearyl and distearyl esters of thiodipropionic acid; and β-alkyl mercaptopropionic acid esters of polyols such as pentaerythritol tetra(β-dodecylmercaptopropionate).

The amount of the sulfur-containing antioxidant to be used is 0.001 to 10 parts by mass, preferably 0.01 to 5 parts by mass with respect to 100 parts by mass of the polyester resin.

Examples of the hindered amine light stabilizer include 2,2,6,6-tetramethyl-4-piperidylstearate, 1,2,2,6,6-pentamethyl-4-piperidylstearate, 2,2,6,6-tetramethyl-4-piperidylbenzoate, bis(2,2,6,6-tetramethyl-4-piperidyl)sebacate, bis(1,2,2,6,6-pentamethyl-4-piperidyl)sebacate, bis(1-octoxy-2,2,6,6-tetramethyl-4-piperidyl)sebacate, 1,2,2,6,6-pentamethyl-4-piperidylmethacrylate, 2,2,6,6-tetramethyl-piperidylmethacrylate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)-bis(tridecyl)-1,2,3,4-butanetetracarboxylate, bis(1,2,2,6,6-pentamethyl-4-piperidyl)-bis(tridecyl)-1,2,3,4-butanetetracarboxylate, bis(1,2,2,6,6-pentamethyl-4-piperidyl)-2-butyl-2-(3,5-di-tert-butyl-4-hydroxybenzyl)malonate, 3,9-bis[1,1-dimethyl-2-{tris(2,2,6,6-tetramethyl-4-piperidyloxycarbonyloxy) butylcarbonyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyloxy)butylcarbonyloxy}ethyl]-2,4,8,10-tetraoxaspiro[5.5]undecane, 1,6-bis(2,2,6,6-tetramethyl-4-piperidylamino)hexane/2,4-dichloro-6-morpholino-s-triazine polycondensates, 1,6-bis(2,2,6,6-tetramethyl-4-piperidylamino)hexane/2,4-dichloro-6-tert-octylamino-s-triazine polycondensates, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8,12-tetraazadodecane, 1,6,11-tris[2,4-bis(N-butyl-N-(2,2,6,6-tetramethyl-4-piperidyl)amino)-s-triazine-6-ylamino]undecane, 1,6,11-tris[2,4-bis(N-butyl-N-(1,2,2,6,6-pentamethyl-4-piperidyl)amino)-s-triazine-6-ylamino]undecane, 1-(2-hydroxyethyl)-2,2,6,6-tetramethyl-4-piperidinol/diethyl succinate polycondensates, and 1,6-bis(2,2,6,6-tetramethyl-4-piperidylamino)hexane/dibromoethane polycondensates.

The amount of the hindered amine compound to be used is 0.001 to 10 parts by mass, preferably 0.01 to 5 parts by mass with respect to 100 parts by mass of the polyester resin.

Examples of the ultraviolet absorber include 2-hydroxybenzophenones such as 2,4-dihydroxybenzophenone, 2-hydroxy-4-methoxybenzophenone, 2-hydroxy-4-octoxybenzophenone and 5,5'-methylenebis(2-hydroxy-4-methoxybenzophenone); 2-(2-hydroxyphenyl)benzotriazoles such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazolylphenol), polyethylene glycol esters of 2-(2-hydroxy-3-tert-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-tert-butylphenyl]benzotriazole, 2-[2-hydroxy-3-(2-methacryloyloxyethyl)-5-tert-octylphenyl]benzotriazole, 2-[2-hydroxy-3-(2-methacryloyloxyethyl)-5-tert-butylphenyl]-5-chlorobenzotriazole, 2-[2-hydroxy-5-(2-methacryloyloxyethyl)phenyl]benzotriazole, 2-[2-hydroxy-3-tert-butyl-5-(2-methacryloyloxyethyl)phenyl]benzotriazole, 2-[2-hydroxy-3-tert-amyl-5-(2-methacryloyloxyethyl)phenyl] benzotriazole, 2-[2-hydroxy-3-tert-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole and 2-[2-hydroxy-4-(3-methacryloyloxypropyl)phenyl]benzotriazole; 2-(2-hydroxyphenyl)-4,6-diaryl-1,3,5-triazines such as 2-(2-hydroxy-4-methoxyphenyl)-4,6-diphenyl-1,3,5-triazine, 2-(2-hydroxy-4-hexyloxyphenyl)-4,6-diphenyl-1,3,5-triazine, 2-(2-hydroxy-4-octoxyphenyl)-4,6-bis(2,4-dimethylphenyl)-1,3,5-triazine, 2-[2-hydroxy-4-(3-C12-13 mixed alkoxy-2-hydroxypropoxy)phenyl]-4,6-bis(2,4-dimethylphenyl)-1,3,5-triazine, 2-[2-hydroxy-4-(2-acryloyloxyethoxy)phenyl]-4,6-bis(4-methylphenyl)-1,3,5-triazine, 2-(2,4-dihydroxy-3-allylphenyl)-4,6-bis(2,4-dimethylphenyl)-1,3,5-triazine and 2,4,6-tris(2-hydroxy-3-methyl-4-hexyloxyphenyl)-1,3,5-triazine; benzoates such as phenyl salicylate, resorcinol monobenzoate, 2,4-di-tert-butylphenyl-3,5-di-tert-butyl-4-hydroxybenzoate, octyl(3,5-di-tert-butyl-4-hydroxy)benzoate, dodecyl(3,5-di-tert-butyl-4-hydroxy)benzoate, tetradecyl(3,5-di-tert-butyl-4-hydroxy)benzoate, hexadecyl(3,5-di-tert-butyl-4-hydroxy)benzoate, octadecyl(3,5-di-tert-butyl-4-hydroxy)benzoate and behenyl(3,5-di-tert-butyl-4-hydroxy)benzoate; substituted oxanilides such as 2-ethyl-2'-ethoxyoxanilide and 2-ethoxy-4'-dodecyloxanilide; cyanoacrylates such as ethyl-a-cyano-β,β-diphenylacrylate and methyl-2-cyano-3-methyl-3-(p-methoxyphenyl)acrylate; and various metal salts and metal chelates, especially salts and chelates of nickel and chrome.

The amount of the ultraviolet absorber to be used is 0.001 to 10 parts by mass, preferably 0.01 to 5 parts by mass with respect to 100 parts by mass of the polyester resin.

Examples of the aliphatic amide compounds to be used as the lubricant include monofatty acid amides such as lauric acid amide, stearic acid amide, oleic acid amide, erucic acid amide, ricinoleic acid amide and 12-hydroxystearic acid amide; N,N'-bis-fatty acid amides such as N,N'-ethylenebislauric acid amide, N,N'-methylenebisstearic acid amide, N,N'-ethylenebisstearic acid amide, N,N'-ethylenebisoleic acid amide, N,N'-ethylenebisbehenic acid amide, N,N'-ethylenebis-12-hydroxystearic acid amide, N,N'-butylenebisstearic acid amide, N,N'-hexamethylenebisstearic acid amide, N,N'-hexamethylenebisoleic acid amide and N,N'-xylylenebisstearic acid amide; alkylol amides such as stearic acid monomethylol amide, coconut oil fatty acid monoethanol amide and stearic acid diethanol amide; N-substituted fatty acid amides such as N-oleylstearic acid amide, N-oleyloleic acid amide, N-stearylstearic acid amide, N-stearyloleic acid amide, N-oleylpalmitic acid amide and N-stearylerucic acid amide; and N,N'-substituted dicarboxylic acid amides such as N,N'-dioleyladipic acid amide, N,N'-distearyladipic acid amide, N,N'-dioleylsebacic acid amide, N,N'-distearylsebacic acid amide, N,N'-distearylterephthalic acid amide and N,N'-distearylisophthalic acid amide. These may be used either individually or as a mixture of 2 or more thereof.

The amount of the lubricant to be used is preferably 0.01 to 30 parts by mass, more preferably 0.1 to 20 parts by mass with respect to 100 parts by mass of the polyester resin.

Examples of the flame retardants include phosphoric acid esters such as triphenyl phosphate, phenol·resorcinol·phosphorus oxychloride condensates, phenol·bisphenol A·phosphorus oxychloride condensates and 2,6-xylenol·resorcinol·phosphorus oxychloride condensates; phosphoric acid amides such as aniline·phosphorus oxychloride condensates and phenol·xylylenediamine·phosphorus oxychloride condensates; phosphazene; halogen-containing flame retardants such as decabromodiphenyl ether and tetrabromobisphenol A; phosphoric acid salts of nitrogen-containing organic compounds such as melamine phosphate, piperazine phosphate, melamine pyrophosphate, piperazine pyrophosphate, melamine polyphosphate and piperazine polyphosphate; red phosphorus, and red phosphorus subjected to surface treatment or microencapsulation; flame-retardant aids such as antimony oxide and zinc borate; and anti-drip agents such as polytetrafluoroethylene and silicon resins; which are preferably used in an amount of 1 to 30 parts by mass, more preferably 5 to 20 parts by mass with respect to 100 parts by mass of the polyester.

In the polyester resin composition of the present invention, the method for blending a metal salt of a sulfonamide compound (b) and a plasticizer (c) with the polyester resin (a) is not restricted, and these can be blended by a conventionally-known method. For example, powder or pellets of the polyester may be blended with (b) and (c) by dry blending, or a part of (b) and (c) is preblended followed by dry blending with the remaining components. The dry blending may be followed by blending with a mill roll, a Banbury mixer or a super mixer and kneading with a uniaxial extruder or a biaxial extruder. This kneading is usually carried out at a temperature of about 200 to 350°C. Further, it is also possible to employ a method wherein (b) and (c) are added during polymerization of the polyester; a method wherein a master batch containing (b) and (c) at high concentrations is prepared followed by adding the master batch to the polyester resin; or the like.

Similarly to plastics in general, the polyester resin composition of the present invention is mainly used as a molding material for various molded products.

When the polyester resin composition of the present invention is molded, molding such as extrusion molding, injection molding, blow molding, vacuum molding or compression molding can be carried out similarly to plastics in general, and various molded products such as sheets, rods, bottles and containers can be easily obtained.

Further, the polyester resin composition of the present invention may be blended with a glass fiber, carbon fiber or the like to be formed into a fiber-reinforced plastics.

### EXAMPLES

The present invention will be described in more detail by way of Production Examples and Examples, but the present invention is not restricted by the Production Examples and the Examples. Production Example means a method for producing the resin compositions of the present invention, and Example means evaluation of the obtained resin compositions.

### [Production Example 1]

A polyester resin composition obtained by blending 0.3 part by mass of a crystalline nucleating agent and 5 parts by mass of a plasticizer shown in Table 2 below with 100 parts by mass of a polyethylene terephthalate resin (TR-8550; manufactured by TEIJIN CHEMICALS LTD.) was mixed, and this polyester resin composition was dried for 3 hours at 140°C under reduced pressure, followed by kneading the polyester resin composition using a biaxial extruder at a cylinder temperature of 260°C, to obtain a pellet. The obtained pellet was dried at 140°C for 3 hours and the evaluation shown below was carried out. In the table, "Compound No." corresponds to each of Nos. 1 to 21 described above.

### (1) Semi-crystallization Time

A 5 mg piece of the pellet obtained by the above method was scraped off and placed in an aluminum pan for differential scanning calorimetry, followed by heating it for 1 minute with a heater which had been heated to 280°C. The resultant was allowed to cool to room temperature, and the pan was covered to prepare a sample. The sample was further heated for 30 seconds with a heater which had been heated to 280°C, and rapidly cooled by being soaked in a mixed solvent of dry ice/methanol for 3 seconds to prepare a sample, which was then used for determination of the semi-crystallization time (seconds) with a differential scanning calorimeter (Diamond; manufactured by PerkinElmer, Inc.).

In the measurement, the rapidly-cooled sample was immediately heated at 100°C/min. to 110°C, and after the attainment of 110°C, the temperature was maintained for 30 minutes to determine the length of time required for the calorie of the endothermic enthalpy necessary for crystallization of the polyester resin composition to become a half, which length of time was defined as the semi-crystallization time (seconds). The results are shown in Table 2 below.

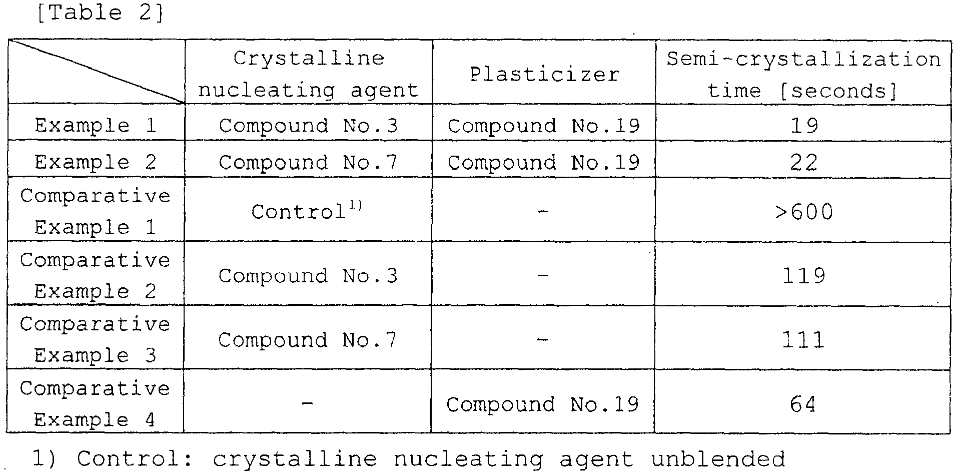

### [Production Example 2]

A polyester resin composition was obtained in the same manner as in Production Example 1 except that 0.3 part by mass of a crystalline nucleating agent and 3 parts by mass of a plasticizer shown in Table 3 below were blended and the cylinder temperature of the biaxial extruder was changed to 270°C, and the semi-crystallization time (seconds) of the resulting polyester resin composition was determined. The heater used for the evaluation had been heated to 290°C instead of 280°C. The results are shown in Table 3 below.

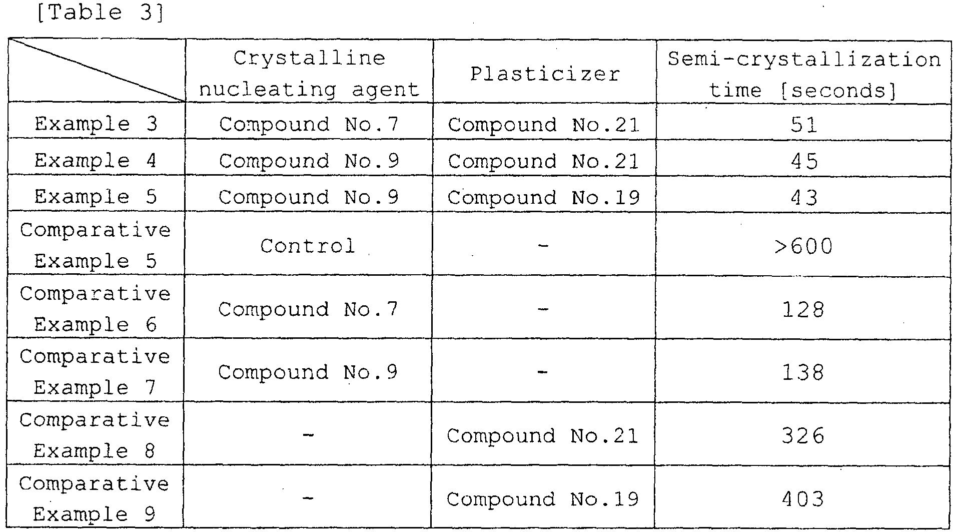

From Table 2 and Table 3, it could be confirmed that polyester resin compositions of the present invention prepared by adding a metal salt of a sulfonamide compound (b) and a plasticizer (c) in combination have remarkably enhanced the crystallization rates compared to compositions prepared by adding a metal salt of a sulfonamide compound solely.

Thus, in the present invention, it was confirmed that, by addition of a metal salt of a sulfonamide compound (b) and a plasticizer (c) to a polyester resin (a) in combination, a polyester resin composition which is excellent in promotion of crystallization can be obtained.

## Claims

1. A polyester resin composition comprising 0.001 to 5 parts by mass of a metal salt of a sulfonamide compound (b) represented by the following General Formula (1): 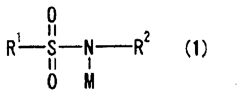 wherein, in General Formula (1), M represents a monovalent metal atom; R¹ and R² each independently represents a hydrogen atom, a C₁-C₁₀ branched or linear alkyl group which optionally has a substituent, or a C₁-C₃₀ cyclic group which optionally has a substituent; and R¹ and R² are optionally linked together to form a cyclic group, and 0.1 to 10 parts by mass of a plasticizer (c) with respect to 100 parts by mass of a polyester resin (a).

2. The polyester resin composition according to claim 1, wherein said plasticizer (c) is a compound represented by the following General Formula (2): 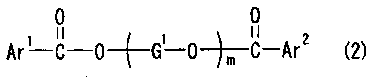 (wherein, in General Formula (2), Ar¹ and Ar² each independently represents a C₆-C₃₀ aryl group which optionally has a substituent; G¹ represents a C₂-C₄ alkylene group which optionally has a branch; m represents an integer of 2 to 30; and the consecutive groups of (-G¹-O-) optionally have different structures), or a compound represented by the following General Formula (3): 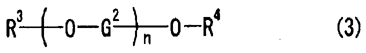 wherein, in General Formula (3), R³ and R⁴ each independently represents a hydrogen atom; a C₁-C₁₀ branched or linear alkyl group which optionally has a substituent; or a C₆-C₃₀ aryl group which optionally has a substituent; G² represents a C₂-C₄ alkylene group which optionally has a branch; n represents an integer of 2 to 30; and the consecutive groups of (-O-G²-) optionally have different structures.

3. The polyester resin composition according to claim 2, wherein said plasticizer (c) is an aromatic diester compound of a polyalkylene glycol obtained from a polyethylene glycol having an average molecular weight of not more than 1000 and benzoic acid.

4. The polyester resin composition according to any of claims 1 to 3, wherein M in said General Formula (1) is a sodium atom.

5. The polyester resin composition according to any preceding claim, wherein said polyester resin (a) contains at least one selected from the group consisting of polyethylene terephthalate, polybutylene terephthalate and polyethylene naphthalate.

6. The polyester resin composition according to any preceding claim, wherein said metal salt of a sulfonamide compound (b) is selected from compounds represented by the following formulae 1 to 9:

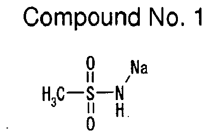

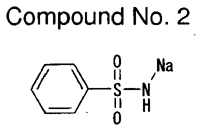

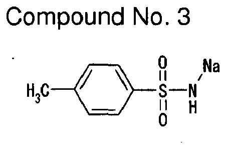

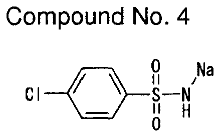

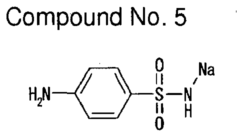

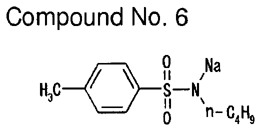

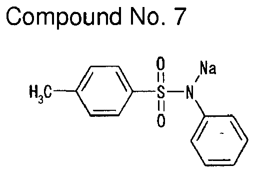

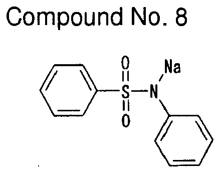

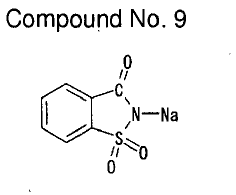

7. The polyester resin composition according to any preceding claim, where said plasticizer (c) is selected from the group consisting of Polyethylene glycol (MW 300) monohexyl ether; Polyethylene glycol (MW 600) diethyl ether; Polyethylene glycol (MW 400) diphenyl ether; Polyethylene glycol (MW 600) methyl butyl ether; Polyethylene glycol (MW 300) di-2-ethyl hexyl ether; Polyethylene glycol (MW 900) di-2-ethyl hexyl ether; Polypropylene glycol (MW 400) di-4-methyl phenyl ether; Polytetramethylene glycol (MW 600) dihexyl ether; Polyethylene glycol/polypropylene glycol (1/1 mixture) (MW 600) didecyl ether; Polyethylene glycol (MW 400) dibenzoate; Polyethylene glycol (MW 400) di-4-tert-butyl benzoate; and Polyethylene glycol (MW 400) dimethyl ether.

8. The polyester resin composition according to any preceding claim, further comprising one or more additives selected from the group consisting of antioxidants, light stabilizers, lubricants, heavy metal inactivators, anti-clouding agents, antistatic agents, halogenated compounds, phosphoric acid ester compounds, phosphoric acid amide compounds, melamine compounds, fluorine resins or metal oxides, flame retardants, fillers, pigments, silicate inorganic additives and crystalline nucleating agents.

9. A method of obtaining a polyester resin composition as defined in any preceding claim, comprising the step of blending a metal salt of a sulfonamide compound (b) and a plasticizer (c) with the polyester resin (a).

10. A method of obtaining a molded article comprising the step of molding a polyester resin composition according to any of claims 1 to 8.

11. A molded article obtained by the method according to claim 10.

12. Use of the metal salt of a sulfonamide compound (b) and a plasticizer (c) according to any of claims 1 to 8, to promote the crystallization of the polyester resin (a) as defined in any of claims 1 to 8.

## Patentansprüche

1. Polyesterharz-Zusammensetzung, umfassend 0,001 bis 5 Massenteile eines Metallsalzes einer Sulfonamidverbindung (b), die durch die folgende allgemeine Formel (1) dargestellt ist: 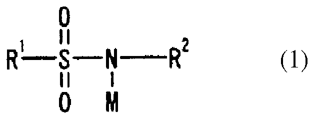 wobei in der allgemeinen Formel (1) M ein monovalentes Metallatom darstellt; R¹ und R² jedes unabhängig Folgendes darstellt: ein Wasserstoffatom, eine verzweigte oder lineare C₁- bis C₁₀-Alkylgruppe, die gegebenenfalls einen Substituenten aufweist, oder eine cyclische C₃- bis C₃₀-Gruppe, die gegebenenfalls einen Substituenten aufweist; und R¹ und R² gegebenenfalls zur Bildung einer cyclischen Gruppe miteinander verknüpft sind; und 0,1 bis 10 Massenteile eines Weichmachers (c) bezogen auf 100 Massenteile eines Polyesterharzes (a).

2. Polyesterharz-Zusammensetzung nach Anspruch 1, wobei der Weichmacher (c) eine Verbindung ist, die durch die folgende allgemeine Formel (2) dargestellt ist: 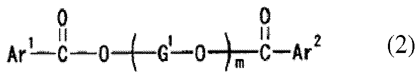 (wobei in der allgemeinen Formel (2) Ar¹ und Ar² jedes unabhängig Folgendes darstellt: eine C₆- bis C₃₀-Arylgruppe, die gegebenenfalls einen Substituenten aufweist; G¹ eine C₂-C₄ -Alkylengruppe darstellt, die gegebenenfalls eine Verzweigung aufweist, m eine ganze Zahl von 2 bis 30 aufweist; und die konsekutiven Gruppen von (-G¹-O-) gegebenenfalls verschiedene Strukturen aufweisen), oder eine Verbindung, die durch die folgende allgemeine Formel (3) dargestellt ist: 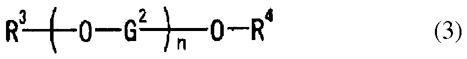 wobei in der allgemeinen Formel (3), R³ und R⁴ jedes unabhängig Folgendes darstellt: ein Wasserstoffatom; eine verzweigte oder lineare C₁- bis C₁₀-Alkylgruppe, die gegebenenfalls einen Substituenten aufweist; oder eine C₆- C₃₀-Arylgruppe, die gegebenenfalls einen Substituenten aufweist; G² eine C₂-C₄-Alkylengruppe darstellt, die gegebenenfalls eine Verzweigung aufweist; n eine ganze Zahl von 2 bis 30 darstellt; und die konsekutiven Gruppen von (-O-G²-) gegebenenfalls verschiedene Strukturen aufweisen.

3. Polyesterharz-Zusammensetzung nach Anspruch 2, wobei der Weichmacher (c) eine aromatische Diesterverbindung eines aus einem Polyethylenglykol mit einem durchschnittlichen Molekulargewicht von nicht mehr als 1000 und Benzoesäure erhaltenen Polyalkylenglykols ist.

4. Polyesterharz-Zusammensetzung nach einem der Ansprüche 1 bis 3, wobei M in der allgemeinen Formel (1) ein Natriumatom ist.

5. Polyesterharz-Zusammensetzung nach einem der vorangehenden Ansprüche, wobei das Polyesterharz (a) mindestens ein aus der Gruppe ausgewähltes enthält, bestehend aus Polyethylenterephthalat, Polybutylenterephthalat und Polyethylennaphthalat.

6. Polyesterharz-Zusammensetzung nach einem der vorangehenden Ansprüche, wobei das Metallsalz einer Sulfonamidverbindung (b) aus Verbindungen ausgewählt ist, die durch die folgenden Formeln 1 bis 9 dargestellt sind:

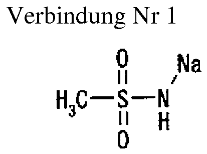

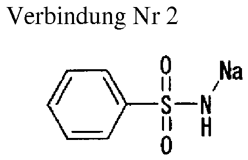

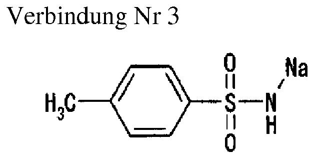

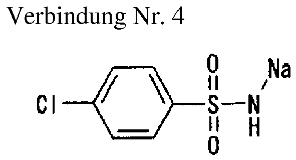

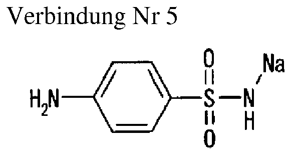

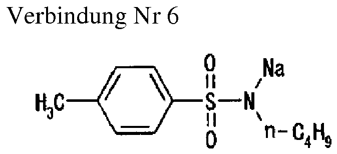

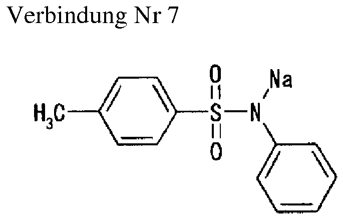

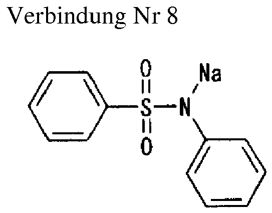

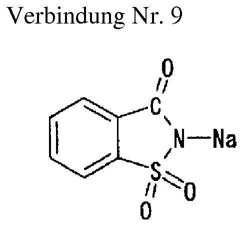

7. Polyesterharz-Zusammensetzung nach einem der vorangehenden Ansprüche, wobei der Weichmacher (c) aus der Gruppe ausgewählt ist, bestehend aus Polyethylenglykol-(MG 300)-monohexylether; Polyethylenglykol-(MG 600)-diethylether; Polyethylenglykol-(MG 400)-diphenylether; Polyethylenglykol-(MG 600)-methylbutylether; Polyethylenglykol-(MG 300)-di-2-ethylhexylether; Polyethylenglykol-(MG 900)-di-2-ethylhexylether; Polypropylenglykol-(MG 400)-di-4-methylphenylether; Polytetramethylenglykol-(MG 600)-dihexylether; Polyethylenglykol-/Polypropylenglykol-(1:1-Gemisch)-(MG 600)-didecylether; Polyethylenglykol-(MG 400)-dibenzoat; Polyethylenglykol-(MG 400)-di-4-tert-butylbenzoat; und Polyethylenglykol-(MG 400)-dimethylether.

8. Polyesterharz-Zusammensetzung nach einem der vorangehenden Ansprüche, ferner umfassend ein oder mehr Additiv(e), die aus der Gruppe ausgewählt sind, bestehend aus Antioxidantien, Lichtstabilisatoren, Gleitmitteln, Schwermetallinaktivatoren, Antitrübungsmitteln, Antistatika, halogenierten Verbindungen, Phosphorsäureester-Verbindungen, Phosphorsäureamid-Verbindungen, Melaminverbindungen, Fluorharzen oder Metalloxiden, Flammschutzmitteln, Füllmitteln, Pigmenten, anorganischen Silikatadditiven und kristallinen Nukleierungsmitteln.

9. Verfahren zum Erhalt einer Polyesterharz-Zusammensetzung wie nach einem der vorangehenden Ansprüche definiert, umfassend den Schritt des Mischens eines Metallsalzes einer Sulfonamidverbindung (b) und eines Weichmachers (c) mit dem Polesterharz (a).

10. Verfahren zum Erhalt eines Formteils, umfassend den Schritt des Formens einer Polyesterharz-Zusammensetzung nach einem der Ansprüche 1 bis 8.

11. Formteil, erhalten mittels des Verfahrens nach Anspruch 10.

12. Verwendung des Metallsalzes einer Sulfonamidverbindung (b) und eines Weichmachers (c) nach einem der Ansprüche 1 bis 8, zur Förderung der Kristallisierung des Polyesterharzes (a) wie nach einem der Ansprüche 1 bis 8 definiert.

## Revendications

1. Composition de résine de polyester comprenant 0,001 à 5 parties en masse d'un sel de métal d'un composé de sulfonamide (b) représenté par la Formule Générale suivante (1) : 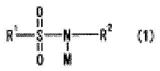 dans laquelle, dans la Formule Générale (1), M représente un atome de métal monovalent ; R¹ et R² représentent chacun indépendamment un atome d'hydrogène, un groupe alkyle en C₁ à C₁₀ ramifié ou linéaire ayant facultativement un substituant, ou un groupe cyclique en C₃ à C₃₀ ayant facultativement un substituant ; et R¹ et R² sont facultativement liés ensemble pour former un groupe cyclique et 0,1 à 10 parties en masse d'un plastifiant (c) par rapport à 100 parties en masse d'une résine de polyester (a).

2. Composition de résine de polyester selon la revendication 1, dans laquelle ledit plastifiant (c) est un composé représenté par la Formule Générale suivante (2) : 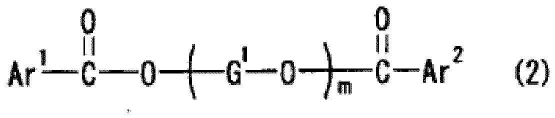 (dans laquelle, dans la Formule Générale (2), Ar¹ et Ar² représentent chacun indépendamment un groupe aryle en C₆ à C₃₀ ayant facultativement un substituant ; G¹ représente un groupe alkylène en C₂ à C₄ ayant facultativement une ramification ; m représente un entier valant de 2 à 30 ; et les groupes consécutifs de (-G¹-O-) ont facultativement différentes structures) ou contiennent un composé représenté par la Formule Générale suivante (3) : 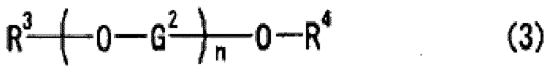 dans laquelle, dans la Formule Générale (3), R³ et R⁴ représentent chacun indépendamment un atome d'hydrogène ; un groupe alkyle en C₁ à C₁₀ ramifié ou linéaire ayant facultativement un substituant ; ou un groupe aryle en C₆ à C₃₀ ayant facultativement un substituant ; G² représente un groupe alkylène en C₂ à C₄ ayant facultativement une ramification ; n représente un entier valant de 2 à 30 ; et les groupes consécutifs de (O-G²-) ont facultativement différentes structures.

3. Composition de résine de polyester selon la revendication 2, dans laquelle ledit plastifiant (c) est un composé diester aromatique d'un polyalkylène de glycol dérivé d'un polyéthylène glycol ayant un poids moléculaire d'au plus 1000 et contenant un acide benzoïque.

4. Composition de résine de polyester selon l'une quelconque des revendications 1 à 3, dans laquelle M dans ladite Formule Générale (1) est un atome de sodium.

5. Composition de résine de polyester selon l'une quelconque des revendications précédentes, dans laquelle ladite résine de polyester (a) contient au moins un élément sélectionné parmi le groupe constitué de téréphtalate de polyéthylène, de téréphtalate de polybutylène et de naphtalate de polyéthylène.

6. Composition de résine de polyester selon l'une quelconque des revendications précédentes, dans laquelle ledit sel de métal d'un composé de sulfonamide (b) est sélectionné parmi les composés représentés par les formules 1 à 9 suivantes :

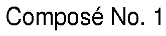

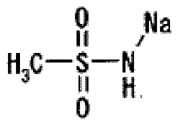

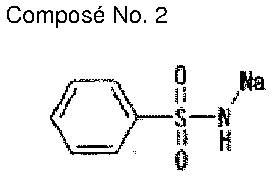

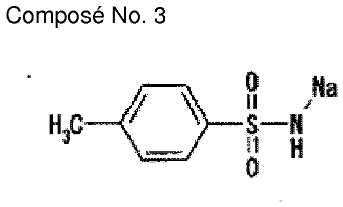

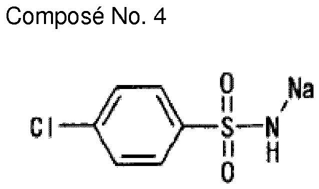

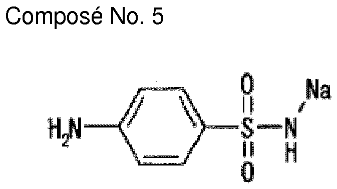

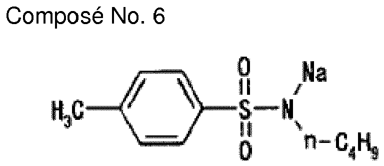

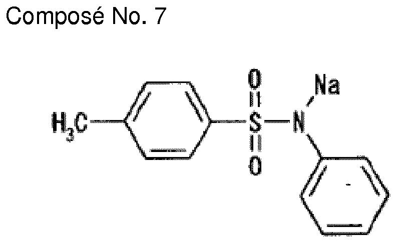

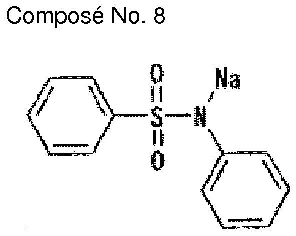

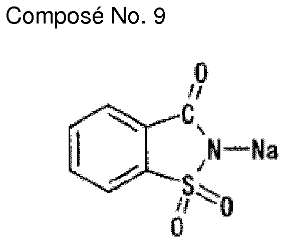

7. Composition de résine de polyester selon l'une quelconque des revendications précédentes, dans laquelle ledit plastifiant (c) est sélectionné parmi le groupe constitué d'éther monohexylique de polyéthylène glycol (MW 300) ; d'éther diéthylique de polyéthylène glycol (MW 600) ; d'éther diphénylique de polyéthylène glycol (MW 400), d'éther méthyl-butylique de polyéthylène glycol (MW 600) : d'éther di-2-éthylhexylique de polyéthylène glycol (MW 300) ; d'éther di-2-éthylhexylique de polyéthylène glycol (MW 900) ; d'éther di-4-méthylphénylique de polypropylène glycol (MW 400) ; d'éther dihéxylique de polytétraméthylène glycol (MW 600) ; d'éther didécylique de polyéthylène glycol/polypropylène glycol (mélange de 1/1) (MW 600) ; de dibenzoate de polyéthylène glycol (MW 400) ; de di-4-tert-butylbenzoate de polyéthylène glycol (MW 400) ; et de diméthyléther de polyéthylène glycol (MW 400).

8. Composition de résine de polyester selon l'une quelconque des revendications précédentes, comprenant en outre un ou plusieurs additifs sélectionnés parmi le groupe constitué d'antioxydants, de photostabilisants, de lubrifiants, d'inactivateurs de métaux lourds, d'agents antibuée, d'agents antistatiques, de composés halogénés, de composés d'esters d'acide organique, de composés d'amide d'acide phosphorique, de composés de mélamine, de résines fluorées ou d'oxydes de métaux, de retardants de flammes, de charges, de pigments, d'additifs inorganiques du silicate et d'agents de nucléation des cristaux.

9. Procédé d'obtention d'une composition de résine de polyester telle que définie dans l'une des revendications précédentes, comprenant l'étape de mélange d'un sel de métal d'un composé de sulfonamide (b) et d'un plastifiant (c) avec la résine de polyester (a).

10. Procédé d'obtention d'un article moulé comprenant l'étape de moulage d'une composition de résine de polyester selon l'une quelconque des revendications 1 à 8.

11. Article moulé obtenu par le procédé selon la revendication 10.

12. Utilisation du sel de métal d'un composé de sulfonamide (b) et d'un plastifiant (c) selon l'une quelconque des revendications 1 à 8 afin de favoriser la cristallisation de la résine de polyester (a) selon le procédé de l'une quelconque des revendications 1 à 8.
